# EUROPEAN PATENT APPLICATION

(11) **EP 1 967 711 A1**
(43) Date of publication of application: **10.09.2008**
(21) Application number: 06843258.2
(22) Date of filing: 26.12.2006
(51) Int. Cl.: F01N 3/20, B01D 53/94, F01N 3/08, F01N 3/28, F01N 3/36

(54) **EXHAUST EMISSION CONTROL DEVICE**

(30) Priority: 27.12.2005 JP 2005375719
(71) Applicant: Hino Motors, Ltd., Hino-shi, Tokyo 191-8660 (JP)
(72) Inventor: TAKENAKA, Yoshihide, Tokyo 191-8660 (JP)
(74) Representative: Walcher, Armin
(86) International application number: PCT/JP2006/325874
(87) International publication number: WO 2007/077817

(57) **Abstract**

An exhaust emission control device is provided which can effectively regenerate a NOₓ absorption reduction catalyst even in a relatively low temperature region to improve NOₓ reduction ratio while minimizing deterioration of fuel economy.

Incorporated in an exhaust pipe 4 through which exhaust gas 3 discharged from a diesel engine 1 via an exhaust manifold 2 flows is a reformer 8 having a fuel adding device 5, a heater 6 and a reforming catalyst 7. Arranged downstream of the reformer is a NOₓ absorption reduction catalyst 9.

## Description

### Technical Field

The present invention relates to an exhaust emission control device.

### Background Art

Exhaust gas from a diesel engine has heretofore been purified by a catalyst incorporated in an exhaust pipe through which the exhaust gas flows. Known as this kind of catalyst is a NOₓ-absorption reduction catalyst which has a property of oxidizing NOₓ in the exhaust gas to temporarily absorb the same in the form of nitrate when an air/fuel ratio of the exhaust gas is lean, and conducting decomposition into NOₓ for reduction and purification thereof with the assistance of unburned HC and CO when the oxygen concentration in the exhaust gas is lowered.

Known as this kind of NOₓ-absorption reduction catalyst having the above-mentioned property is, for example, a catalyst made from alumina and carrying platinum and barium or a catalyst made from alumina and carrying platinum and potassium.

Since no further NOₓ can be absorbed once an absorbed NOₓ amount increases into saturation in the NOₓ-absorption reduction catalyst, it is periodically required to lower the O₂ concentration in the exhaust gas flowing to the NOₓ-absorption reduction catalyst to decompose and discharge NOₓ.

For example, in application to a gasoline engine, lowering the operational air/fuel ratio in the engine (operating the engine with rich air/fuel ratio) can lower the O₂ concentration and increase the reduction components such as unburned HC and CO in the exhaust gas for facilitation of decomposition and discharge of NOₓ. However, in use of a NOₓ-absorption reduction catalyst in an exhaust emission control device for a diesel engine, it is difficult to operate the engine with rich air/fuel ratio.

Thus, it has been necessary that fuel (HC) is added to the exhaust gas upstream of a NOₓ-absorption reduction catalyst, the added fuel being reacted as reducing agent with O₂ on the reduction catalyst so as to lower the O₂ concentration in the exhaust gas (see, for example, Reference 1).
[Reference 1] JP 2000-356127A

### Summary of the Invention

### Problems to be Solved by the Invention

However, in such fuel addition upstream of a NOₓ-absorption reduction catalyst, part of HC produced due to evaporation of the added fuel reacts with O₂ (combustion) in the exhaust gas on the NOₓ-absorption reduction catalyst, and decomposition and discharge of NOₓ are started after the O₂ concentration becomes substantially zero in an ambient atmosphere around the NOₓ-absorption reduction catalyst. Thus, in a driving condition that a combustion temperature (about 220-250°C) necessary for reaction of HC with O₂ (combustion) cannot be obtained on the NOₓ-absorption reduction catalyst (for example, in driving at reduced speed on city roads often congested with traffic), NOₓ cannot be efficiently decomposed and discharged from the reduction catalyst and the regeneration of the reduction catalyst does not efficiently progress, disadvantageously resulting in decrease of recovery ratio of NOₓ-absorption sites occupied in volume of the catalyst to deteriorate absorption capacity.

Temperature raise control to the engine and/or increase in amount of fuel to be added so as to overcome the problem will, however, bring about substantial deterioration of fuel economy, resulting in difficulty in practical application.

The invention was made in view of the above and has its object to provide an exhaust emission control device which can effectively regenerate a NOₓ-absorption reduction catalyst even in a relatively low temperature region to improve NOₓ reduction ratio while minimizing deterioration of fuel economy,.

### Means or Measures for Solving the Problems

The invention is directed to an exhaust gas emission control device comprising a reformer incorporated in a gas pipe through which exhaust gas from an engine flows, said reformer having a fuel adding device, a heater and a reforming catalyst, and a NOₓ-absorption reduction catalyst arranged downstream of the reformer.

The above-mentioned means can obtain the following workings or operations.

With the exhaust gas from the engine being delivered via the exhaust pipe to the reformer, fuel is added as reducing agent by the fuel adding device on an entry side of the heater. Thus, the fuel is heated by the heater to produce concentrated HC gas with the exhaust gas being raised to a temperature required for action of the reforming catalyst. The HC gas is guided together with the exhaust gas to the reforming catalyst. After it reacts with O₂ coexisting in the ambient atmosphere to raise the ambient temperature and O₂ is consumed, the HC gas is decomposed into highly reactive H₂ and CO which are guided to a posterior NOₓ-absorption reduction catalyst and, on a surface of the NOₓ-absorption reduction catalyst, NOₓ is effectively reduced into N₂ even at a temperature lower than a conventional combustion temperature in fuel addition.

As a result, even in a driving condition that a reaction temperature necessary for reaction of HC with O₂ (combustion) cannot be obtained on the NOₓ-absorption reduction catalyst (for example, in driving at reduced speed on city roads often congested with traffic), by operating the reformer with a minimum level of electricity and without temperature raise control to the engine nor increase in amount of fuel to be added, NOₓ can be efficiently decomposed and discharged from the NOₓ-absorption reduction catalyst, so that regeneration of the NOₓ-absorption reduction catalyst effectively progresses, resulting in increase of recovery ratio of NOₓ-absorption sites occupied in volume of the catalyst to prevent deterioration of absorption capacity and of fuel economy, leading to attainment of practical application.

In the exhaust emission control device, the heater in the reformer may be constituted by an anterior oxidation catalyst unit with oxidation catalyst having heating function being evenly arranged.

The anterior oxidation catalyst unit may be a membrane metal heater comprising a strip-like metal membrane coated with oxidation catalyst and capable of temperature raising through application of current so as to serve as oxidation catalyst with heating function and an insulating alumina tape as oxidation catalyst, the metal membrane and the insulating tape being wound together spirally in an overlapping manner.

Alternatively, the anterior oxidation catalyst unit may be a wire mesh heater comprising wire sheets coated with oxidation catalyst and capable of temperature raising through application of current so as to serve as oxidation catalyst with heating function and insulating alumina meshes as oxidation catalyst, the wire sheet and the insulating mesh being laminated alternately and plurally in a direction of flow of the exhaust gas.

In the exhaust emission control device, the heater in the reformer may comprise an anterior oxidation catalyst unit with a centrally arranged oxidation catalyst with heating function, a mixer being arranged between the anterior oxidation catalyst unit and the reforming catalyst.

### Effects of the Invention

An exhaust emission control device according to the invention has excellent effects that a NOₓ-absorption reduction catalyst can be effectively regenerated even in a relatively low temperature region to improve NOₓ reduction ratio while minimizing the deterioration of fuel economy.

### Brief Description of the Drawings

Fig. 1 is a schematic view showing an embodiment of the invention;
Fig. 2 is a perspective view showing a membrane metal heater as heater in the embodiment of the invention;
Fig. 3 is a perspective view showing a wire mesh heater as heater in the embodiment of the invention;
Fig. 4 is a schematic view showing a further embodiment of the invention; and
Fig. 5 is a front view showing a mixer in the further embodiment of the invention.

### Explanation of the Reference Numerals

- 1: diesel engine (engine)
- 3: exhaust gas
- 4: exhaust pipe
- 5: fuel adding device
- 6: heater
- 7: reforming catalyst
- 8: reformer
- 9: NOₓ-absorption reduction catalyst
- 15: fuel
- 16: metal membrane
- 17: insulating alumina tape
- 18: membrane metal heater
- 19: wire sheet
- 19': insulating alumina mesh
- 20: wire mesh heater
- 32: oxidation catalyst with heating function
- 33: anterior oxidation catalyst unit
- 34: mixer

### Best Mode for Carrying Out the Invention

Next, embodiments of the invention will be described in conjunction with the drawings.

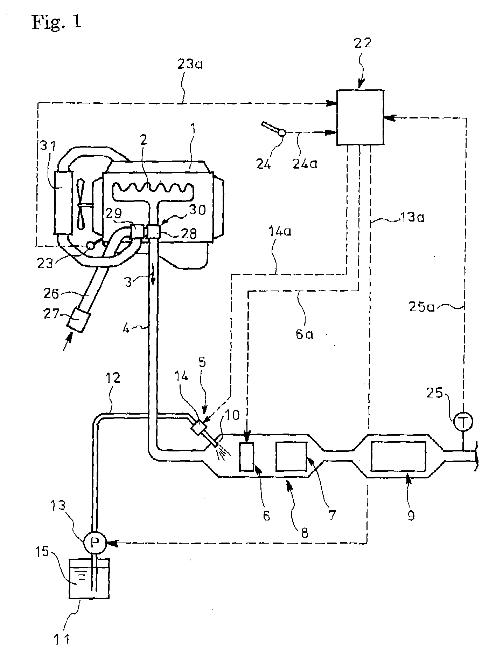

Fig. 1 shows an embodiment of the invention. Incorporated in an exhaust pipe 4 through which exhaust gas 3 discharged from a diesel engine 1 via an exhaust manifold 2 flows is a reformer 8 having a fuel adding device 5, a heater 6 and a reforming catalyst 7. A NOₓ-absorption reduction catalyst 9 is arranged downstream of the reformer.

The fuel adding device 5 in the reformer 8 comprises an injection nozzle 10 arranged on the entry side of the heater 6 and connected via a fuel supply pipe 12 to a fuel tank 11. Fuel 15 such as light oil may be added as reducing agent to the entry side of the heater 6 via the injection nozzle 10 by driving a supply pump 13, which is incorporated in the fuel supply pipe 12, and opening an addition valve 14.

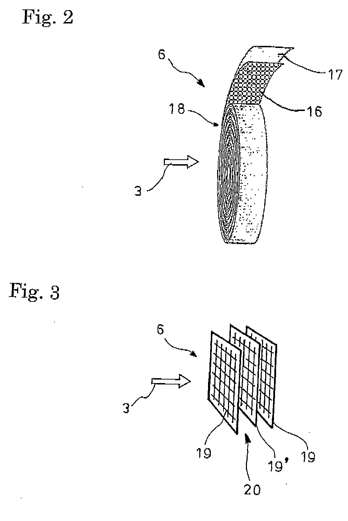

The heater 6 in the reformer 8 is constituted by an anterior oxidation catalyst unit with evenly arranged oxidation catalyst with heating function. The heater 6 may be, for example, a membrane metal heater 18 as shown in Fig. 2 which comprises a strip-like metal membrane 16 coated with oxidation catalyst and capable of temperature raising through application of current so as to serve as oxidation catalyst with heating function and an insulating alumina tape 17 as oxidation catalyst, the metal membrane and the insulating tape being wound together spirally in an overlapping manner. Alternatively, it may be a wire mesh heater 20 as shown in Fig. 3 which comprises wire sheets 19 coated with oxidation catalyst and capable of temperature raising through application of current so as to serve as oxidation catalysts with heating function and insulating alumina meshes 19' as oxidation catalysts, the wire sheet and the insulating alumina mesh being laminated alternately and plurally in a direction of flow of the exhaust gas 3.

The reforming catalyst 7 in the reformer 8 serves to decompose the HC component, which is produced due to fuel addition by the fuel adding device 5, into H₂ and CO in the exhaust gas 3. This kind of reforming catalyst 7 may comprise, for example, an oxide such as alumina or silica or a complex oxide such as zeolite as a carrier carrying for example Pd, Pt or Rh as active metal.

In a controller 22 serving as engine control computer (ECU: Electronic Control Unit), current driving conditions are determined by a revolution speed signal 23a from a revolution speed sensor 23 which detects revolution speed of the diesel engine 1, a load signal 24a from an accelerator sensor 24 which detects a step-in angle of an accelerator pedal and a temperature signal 25a from a temperature sensor 25 which detects temperature of the exhaust gas 3 having passed through the reformer 8 and NOₓ-absorption reduction catalyst 9. On the basis of the current driving conditions thus determined, an amount of fuel 15 to be added by the fuel adding device 5, time of current application to the heater 6 and the like are determined so that the controller 22 outputs a drive command signal 13a to the supply pump 13, an opening/closing command signal 14a to the addition valve 14 and a current application command signal 6a to the heater 6. Thus, the fuel 15 is injected via the injection nozzle 10 in the fuel adding device 5 and is passed through the heater 6 to produce concentrated HC gas and raise the exhaust gas 3 to a temperature (about 300°C) required for action of the reforming catalyst 7. Then, the HC gas is guided together with the exhaust gas 3 to the reforming catalyst 7 and reacts with O₂ coexisting in the ambient atmosphere to raise the ambient temperature and consumes O₂; thereafter, the HC gas is decomposed into highly reactive H₂ and CO which are introduced into the posterior NOₓ-absorption reduction catalyst 9 for regeneration of the same.

In Fig. 1, reference numeral 26 denotes a suction pipe for the diesel engine 1 having an air cleaner 27 at its upstream end. Incorporated in the suction pipe 26 downstream thereof is a compressor 29 driven by a turbine 28 which in turn is incorporated in the exhaust pipe 4 on a discharge side of the exhaust manifold 2. The turbine 28 and the compressor 29 constitutes a turbocharger 30. Incorporated in the suction pipe 26 downstream of the compressor 29 is an intercooler 31.

Next, mode of working or operation of the above embodiment will be described.

With the exhaust gas 3 from the diesel engine 1 being delivered via the exhaust pipe 4 to the reformer 8, the fuel 15 is added as reducing agent via the injection nozzle 10 of the fuel adding device 5 to the entry side of the heater 6 such as the membrane metal heater 18 (see Fig. 2) or the wire mesh heater 20 (see Fig. 3) with oxidation catalyst floor temperature being raised through application of current so that the fuel 15 is heated by the heater 6 to produce concentrated HC gas while the exhaust gas 3 is raised to a temperature (about 300°C) required for the action of the reforming catalyst 7; the HC gas is guided together with the exhaust gas 3 to the reforming catalyst 7 and reacts with O₂ coexisting in the ambient atmosphere. Thus, after the ambient temperature is raised and O₂ is consumed, the HC gas is decomposed into high reactive H₂ and CO which are guide to the posterior NOₓ-absorption reduction catalyst 9 and on the surface of the reduction catalyst 9 NOₓ is efficiently reduced into N₂ even at a temperature lower than a conventional combustion temperature in fuel addition.

If the heater 6 were constituted by the anterior oxidation catalyst unit solely with oxidation catalysts having heating function, the whole of the anterior oxidation catalyst unit must be raised to a temperature required for action thereof, which would require greater electricity. In view of the fact that a percentage of the fuel 15 required to be oxidized by the anterior oxidation catalyst unit is about 40% or less, in the embodiment, the heater 6 is constituted by an anterior oxidation catalyst unit with the evenly arranged oxidation catalyst or catalysts with heating function such as the membrane metal heater 18 (see Fig. 2) or the wire mesh heater 20 (see Fig. 3), so that by applying electricity on the evenly arranged oxidation catalyst or catalysts with heating function, temperature required for starting of oxidizing the fuel 15 can be maintained on the oxidation catalysts with heating function by means of less electric power, thereby attaining effective regeneration of the NOₓ-absorption reduction catalyst 9 with less application of current to the heater 6. Depending upon the percentage of the fuel 15 to be oxidized by the anterior oxidation catalyst unit, the membrane metal heater 18 may be formed by spirally winding the single strip-like metal membrane 16 and plural insulating alumina tapes 17 in an overlapping manner; or the wire mesh heater 20 may be formed by laminating the single wire sheet 19 and the plural insulating alumina meshes 19' alternately and plurally.

The reason why the reforming catalyst 7 is made to have no heating function is that if the reforming catalyst 7 were of heating function, then the temperature on the entry side of the reforming catalyst 7 might not be sufficiently raised and would bring abut wasteful portions as catalyst. In the embodiment, the anterior oxidation catalyst unit is arranged upstream of the reforming catalyst 7, so that the whole including the entry side of the reforming catalyst 7 can be increased in temperature and bring about no wasteful portions.

As a result, even in a driving condition at lower load region that a combustion temperature (about 220-250°C) necessary for reaction of HC with O₂ (combustion) cannot be obtained on the NOₓ-absorption reduction catalyst 9 (for example, in driving at reduced speed on city roads often congested with traffic), by operating the reformer 8 with a minimum level of electricity and without temperature raise control to the diesel engine 1 nor increase in amount of fuel to be added, NOₓ can be efficiently decomposed and discharged from the NOₓ-absorption reduction catalyst 9, so that regeneration of the NOₓ-absorption reduction catalyst 9 effectively progresses, resulting in increase of recovery ratio of NOₓ-absorption sites occupied in volume of the catalyst to prevent deterioration of absorption capacity and of fuel economy, leading to attainment of practical application.

Thus, while minimizing the deterioration of fuel economy, regeneration of the NOₓ absorption reduction catalyst can be efficiently conducted even in a relatively low temperature region to improve NOₓ reduction ratio.

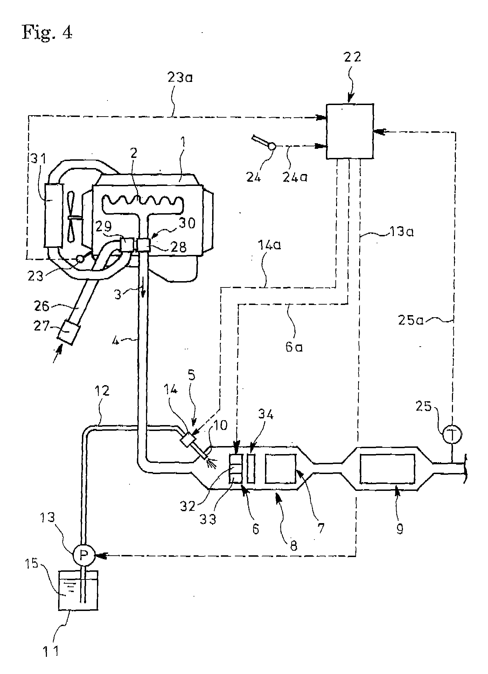

Fig. 4 shows a further embodiment of the invention in which parts similar to those in Fig. 1 are represented by the same reference numerals. With a fundamental structure being the same as that in Fig. 1, it is characterized in that, as shown in Fig. 4, a heater 6 in a reformer 8 is constituted by an anterior oxidation catalyst unit 33 having centrally arranged oxidation catalyst 32 with heating function, a mixer 34 being arranged between the anterior oxidation catalyst unit 33 and a reforming catalyst 7.

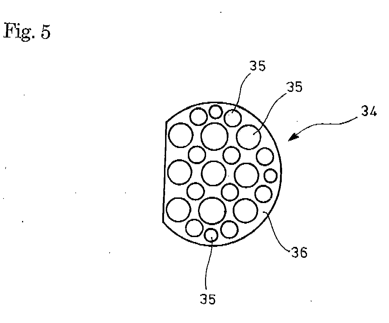

The mixer 34 is constituted, for example, by a plurality of disks 36 arranged in a direction of flow of the exhaust gas 3, each disk being partly cut out and having a number of through holes 35 with different diameters as shown in Fig. 5.

In the embodiment shown in Figs. 4 and 5, with exhaust gas 3 from a diesel engine 1 being delivered via an exhaust pipe 4 to the reformer 8, fuel 15 is added as reducing agent via an injection nozzle 10 of a fuel adding device 10 on an entry side of the heater 6 which is constituted by the anterior oxidation catalyst 33 with the centrally arranged oxidation catalyst 32 with heating function with oxidation catalyst floor temperature being locally raised by through application of current. Then, the fuel 15 is locally heated by the oxidation catalyst 32 with heating function to produce concentrated HC gas and is stirred for mixing by the mixer 34. As a result, just like the Fig. 1 embodiment, the exhaust gas 3 is raised to a temperature (about 300°C) required for action of the reforming catalyst 7 and the HC gas is guided together with the exhaust gas 3 to the reforming catalyst 7 and reacts with O₂ coexisting with the ambient atmosphere. After the ambient temperature is raised and O₂ is consumed, the HC gas is decomposed into highly reactive H₂ and CO which are guided to a posterior NOₓ absorption reduction catalyst 9 and, on the surface of the NOₓ-absorption reduction catalyst 9, NOₓ is effectively reduced into N₂ even at a temperature lower than a conventional combustion temperature in fuel addition.

In the embodiment shown in Fig. 4, the heater 6 is constituted by the anterior oxidation catalyst unit 33 with the centrally arranged oxidation catalyst 32 with heating function, so that by centralizing the electricity to the centrally arranged oxidation catalyst 32 with heating function, the temperature enough for starting the oxidization of the fuel 15 can be maintained on the oxidation catalyst 32 with heating function by electricity less than that of the Fig. 1 embodiment, so that the NOₓ-absorption reduction catalyst 9 can be efficiently regenerated through a minimum level of current application to the heater 6.

As a result, just like the embodiment shown in Fig. 1, even in a driving condition in a lower load region that a combustion temperature (about 220-250°C) necessary for reaction of HC with O₂ (combustion) cannot be obtained on the NOₓ-absorption reduction catalyst 9 (for example, in driving at reduced speed on city roads often congested with traffic), by operating the reformer 8 with a minimum level of electricity and without temperature raise control to the diesel engine 1 nor increase in amount of fuel to be added, NOₓ can be efficiently decomposed and discharged from the NOₓ-absorption reduction catalyst 9, so that regeneration of the NOₓ absorption reduction catalyst 9 effectively progresses, resulting in increase of recovery ratio of NOₓ absorption sites occupied in volume of the catalyst to prevent deterioration of absorption capacity and of fuel economy, leading to attainment of practical application.

Thus, also in the embodiment shown in Fig. 4, just like the embodiment shown in Fig. 1, the NOₓ-absorption reduction catalyst can be efficiently regenerated even in a relatively low temperature region to improve the NOₓ reduction ratio while minimizing the deterioration of fuel economy.

It is to be understood that an exhaust emission control device according to the invention is not limited to the above embodiments and that various changes and modifications may be made without departing from the scope of the invention.

## Claims

1. An exhaust emission control device comprising a reformer(8) incorporated in an exhaust pipe(4) through which exhaust gas from an engine(1) flows, said reformer(8) having a fuel adding device(5), a heater(6) and a reforming catalyst(7), and a NOₓ-absorption reduction catalyst(9) arranged downstream of the reformer.

2. An exhaust emission control device as claimed in claim 1, wherein the heater(6) in the reformer is constituted by an anterior oxidation catalyst unit with oxidation catalyst having heating function being evenly arranged.

3. An exhaust emission control device as claimed in claim 2, wherein the anterior oxidation catalyst unit is a membrane metal heater(18) comprising a strip-like metal membrane(16) coated with oxidation catalyst and capable of temperature raising through application of current so as to serve as oxidation catalyst with heating function and an insulating alumina tape(17) as oxidation catalyst, the metal membrane and the insulating tape being wound together spirally in an overlapping manner.

4. An exhaust emission control device as claimed in claim 2, wherein the anterior oxidation catalyst unit is a wire mesh heater(20) comprising wire sheets(19) coated with oxidation catalyst and capable of temperature raising through application of current so as to serve as oxidation catalyst with heating function and insulating alumina meshes(19') as oxidation catalyst, the wire sheet and the insulating mesh(19') being laminated alternately and plurally in a direction of flow of the exhaust gas.

5. An exhaust emission control device as claimed in claim 1, wherein the heater(6) in the reformer comprises an anterior oxidation catalyst(32) unit with centrally arranged oxidation catalyst with heating function, a mixer(34) being arranged between said anterior oxidation catalyst unit(32) and the reforming catalyst(7).
